# FASCICULE DE BREVET EUROPEEN

(11) **EP 0 421 865 B1**
(45) Date de publication et mention de la délivrance du brevet: **14.07.1993**
(21) Numéro de dépôt: 90402718.2
(22) Date de dépôt: 02.10.1990
(51) Int. Cl.: F02K 9/62, F02K 9/64

(54) **Chambre de combustion de propulseur**
Raketenbrennkammer
Rocket combustion chamber

(30) Priorité: 04.10.1989 FR 8912996
(43) Date de publication de la demande: 10.04.1991
(73) Titulaire: SOCIETE EUROPEENNE DE PROPULSION (S.E.P.) S.A., 92150 Suresnes (FR)
(72) Inventeur: Soler, Etienne, F-33160 Saint Médard en Jalles (FR); Tauzin, Jean-Claude, F-33190 La Réole (FR)
(74) Mandataire: Joly, Jean-Jacques

(56) Documents cités:
- EP-A- 0 249 393
- DE-B- 1 019 865
- FR-A- 1 104 498
- FR-A- 1 118 997
- US-A- 2 706 887
- US-A- 2 955 415
- US-A- 3 126 702
- US-A- 3 374 632

## Description

La présente invention concerne une chambre de combustion notamment pour propulseur à ergols liquides selon le préambule de la revendication 1.

Les chambres de propulseurs à ergols liquides comprennent généralement une chambre, avec un foyer prolongé par un col de tuyère, et un divergent de tuyère raccordé au col et destiné à permettre la détente des gaz de combustion des ergols. L'ensemble est fixé en amont sur un injecteur d'ergols.

La recherche de performances de plus en plus élevées a conduit à l'utilisation de métaux réfractaires et résistants à l'oxydation soit en eux-mêmes (platine, rhénium, tantale,...), soit par formation d'un revêtement de protection (par exemple niobium revêtu d'un disiliciure). Pour éviter les surchauffes excessives, un film de refroidissement, en général riche en ergol combustible, est souvent injecté près de la paroi de la chambre.

Les matériaux céramiques tels que, par exemple, des carbures, nitrures ou oxydes, présentent un intérêt particulier en raison de leur caractère réfractaire, de leur inertie thermique, de leur faible densité et de leur relative abondance. Toutefois, les matériaux céramiques, obtenus généralement par frittage de poudres présentent une mauvaise tenue aux chocs thermiques, ce qui ne permet pas leur emploi pour réaliser des chambres de combustion de propulseur.

Récemment sont apparus des matériaux composites réfractaires qui présentent sensiblement les mêmes avantages que les matériaux céramiques en y alliant une résistance considérablement accrue aux sollicitations mécaniques, notamment du point de vue de la ténacité, et aux chocs thermiques. Ces matériaux sont constitués par un renfort fibreux densifié par une matrice. Le renfort est en fibres réfractaires, généralement en fibres de carbone ou en fibres céramiques (par exemple fibres de carbure de silicium). La matrice est généralement en carbone ou en céramique (par exemple carbure de silicium). La densification du renfort fibreux par le matériau constitutif de la matrice est réalisée par imprégnation-pyrolyse, ou par infiltration chimique en phase vapeur.

L'utilisation de matériaux composites réfractaires pour la réalisation d'éléments de chambres de combustion de propulseurs à ergols liquides soulève quelques problèmes.

Il est difficile de réaliser d'un seul tenant, de façon reproductible, des formes géométriques tourmentées ou présentant une forte variation de section, comme c'est le cas du col de tuyère. Cette difficulté peut être contournée en réalisant de façon séparée la partie chambre et la partie divergent, mais se pose alors le problème de la liaison entre ces parties. Dans le cas où ces deux parties sont en matériaux différents, par exemple l'une métallique et l'autre en matériau composite réfractaire, la difficulté d'assurer une bonne liaison à haute température est encore accrue en raison d'une dilatation différentielle importante et d'une éventuelle réaction chimique entre les pièces.

Un autre problème tient à une certaine perméabilité aux gaz que présentent les matériaux composites en raison d'une porosité résiduelle inévitable, la densification ne pouvant être en pratique totale. La perméabilité aux gaz de combustion est plus importante dans la chambre (pression interne élevée) que dans le divergent (pression interne faible). Il en résulte une perte de performance, puisque les fuites dans la chambre ne participent pas à la poussée, et une diminution de la sécurité, puisque les fuites sont constituées de gaz inflammables en général toxiques.

Aussi, la présente invention a-t-elle pour but de fournir une chambre de combustion de propulseur ayant une architecture adaptée à l'emploi de matériau composite réfractaire, au moins pour une partie de la chambre, sans entraîner les inconvénients précités.

Ce but est atteint au moyen d'une chambre de combustion constituée d'une première partie, ou cartouche, comprenant le foyer et le col de tuyère, et d'une deuxième partie, ou enveloppe, comprenant le divergent de tuyère prolongé, vers l'amont, par une paroi entourant la première partie, en ménageant un jeu avec elle, la liaison entre les première et deuxième parties étant réalisée dans une zone située au niveau ou à proximité de l'extrémité amont de la chambre.

Le report de la liaison entre la chambre et le divergent dans une zone relativement froide en fonctionnement, au niveau du raccordement avec l'injecteur d'ergols, facilite la réalisation de la liaison du fait que d'éventuelles incompatibilités thermique ou chimique s'y trouvent supprimées ou, au moins, très fortement atténuées. Il est alors possible de réaliser les deux parties de la chambre en des matériaux différents, par exemple une première partie (chambre) métallique et une deuxième partie (divergent) en composite réfractaire, ou inversement.

En outre, dans le cas où le matériau constitutif de la première partie (chambre) présente une certaine perméabilité au gaz de combustion, l'existence de la paroi de la deuxième partie, autour de la chambre, permet d'accroître l'étanchéité globale. Cette double barrière constitue également un élément de sécurité en cas d'explosion de la première partie (chambre), la paroi entourant cette dernière constituant un carter de rétention.

La réalisation de la chambre de combustion en deux parties facilite le développement de celle-ci, puisque la première partie peut être soumise à des essais séparés au sol, tandis que le divergent peut être soumis à des essais séparés dans des conditions de vol, en simulation d'altitude. De plus, la première partie constituant la chambre, qui est la plus soumise à des sollicitations thermomécaniques, peut être éventuellement remplacée, d'où une diminution du coût d'exploitation de l'ensemble pour un nombre de missions ou cycles donné.

Avantageusement, l'espace situé entre la première partie et la paroi de la deuxième partie qui l'entoure communique avec le divergent de tuyère. Les gaz de fuite ayant éventuellement traversé la paroi de la chambre sont ainsi réinjectés dans le divergent, ce qui permet d'éviter des diminutions de performance et de sécurité.

Un ou plusieurs appuis locaux peuvent être ménagés entre la première partie et la paroi de la deuxième partie qui l'entoure, par exemple à l'extrémité aval de la première partie (sortie du col de tuyère), afin d'augmenter la rigidité de l'ensemble.

Le débit de fuite réinjecté dans le divergent forme un film qui peut participer au refroidissement du divergent. Le refroidissement du divergent, ou bien son réchauffement ou celui de la chambre, peut aussi être obtenu par injection de fluide dans l'espace ménagé entre la première partie et la paroi qui l'entoure.

Un mode de réalisation de l'invention sera maintenant décrit, à titre indicatif mais non limitatif, en référence aux dessins annexés, sur lesquels :
- la figure 1 est une vue en coupe longitudinale d'une chambre de combustion de propulseur à ergols liquides conforme à l'invention,
- la figure 2 est une vue en coupe radiale selon le plan II-II de la figure 1, et
- la figure 3 est une vue partielle en coupe longitudinale montrant une variante de réalisation de la chambre de combustion de propulsion de la figure 1.

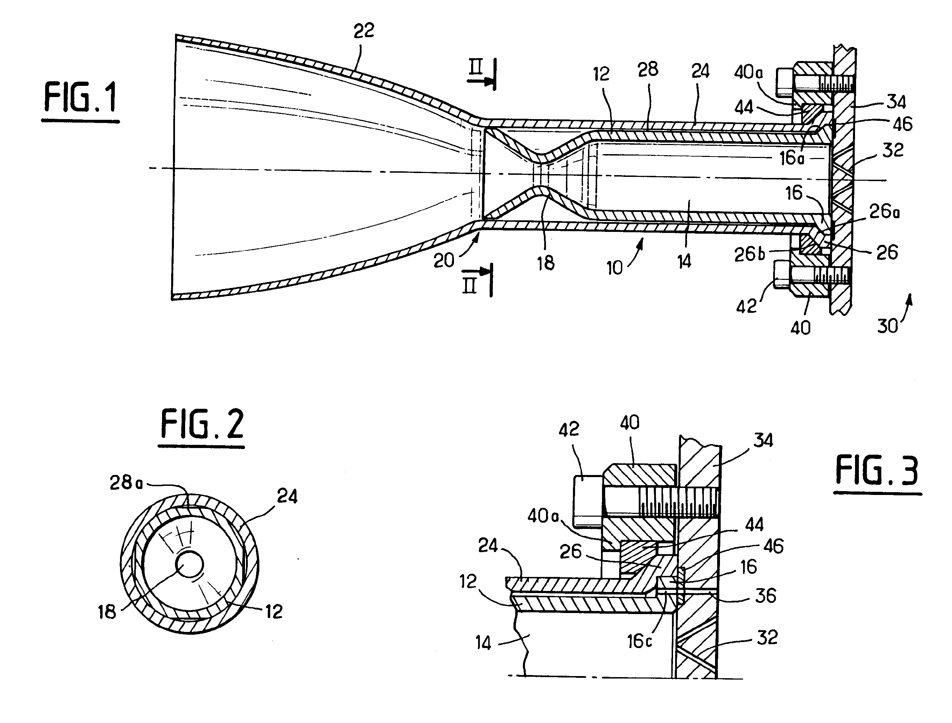

La chambre 10 illustrée par la figure 1 est constituée d'une première partie, ou cartouche 12, formant la chambre proprement dite avec un foyer 14 prolongé vers l'aval par un col de tuyère 18 et une deuxième partie, ou enveloppe 20, comprenant un divergent de tuyère 22 prolongé vers l'amont par une paroi tubulaire 24 entourant la première partie 12 en ménageant avec celle-ci un jeu annulaire 28. A son extrémité amont, la chambre 10 est raccordée à un injecteur d'ergols 30 qui injecte des ergols liquides dans le foyer 14, à travers des passages 32 formés dans la paroi frontale 34 de l'injecteur.

La cartouche 12 et l'enveloppe 20 sont reliées l'une à l'autre à l'extrémité amont de la chambre de combustion, au niveau du raccordement avec l'injecteur d'ergols, c'est-à-dire dans une zone relativement froide lors des phases de fonctionnement.

Dans l'exemple illustré, la cartouche 12 présente à son extrémité amont un rebord extérieur 16 qui se raccorde à la surface extérieure cylindrique de la cartouche par une surface tronconique 16a. De façon correspondante, la partie tubulaire 24 est élargie à son extrémité amont 26 pour s'adapter sur le rebord 16, l'extrémité 26 se raccordant au reste de la partie tubulaire 24 par une surface tronconique intérieure 26a, en appui sur la surface 16a, et une surface tronconique extérieure 26b.

Les extrémités amont de la cartouche 12 et de la partie tubulaire 24 sont serrées contre la paroi frontale 34 de l'injecteur 30 au moyen d'une bride 40, reliée à la paroi 34 par des vis 42 et agissant sur l'extrémité 26 de la partie tubulaire 24 par l'intermédiaire d'une bague 44. Un joint d'étanchéité 46 est logé dans une rainure annulaire formée dans la face avant de la paroi 34, au niveau de l'interface entre le rebord 16 de la cartouche 12 et l'extrémité 26 de la partie tubulaire 24.

La bague 44 présente une surface interne tronconique qui s'appuie sur la surface correspondante 26b, et une surface externe cylindrique qui s'ajuste à l'intérieur de la bride 40. Celle-ci présente, sur sa paroi interne, un gradin 40a qui vient en appui contre la face avant de la bague 44.

La cartouche 12 est montée dans l'enveloppe 20 en étant introduite à travers l'ouverture amont de la partie tubulaire 24. La bride 40 est ensuite enfilée sur cette partie tubulaire, le diamètre interne minimum de la bride 40 étant supérieur au diamètre externe maximum de l'extrémité 26. La bague 44 est placée sur l'extrémité 26, cette bague étant réalisée en plusieurs parties qui s'étendent chacune sur un arc de cercle au plus égal à 180°, afin de pouvoir être mise en place autour de l'extrémité 26. Enfin, la bride 40 est déplacée, en direction arrière au contact de la bague 44 puis est serrée contre celle-ci au moyen des vis 42.

En variante, la bride 40 et les vis 42 pourront être remplacées par une pièce de liaison annulaire ayant une partie avant s'appuyant sur la bague 44, une partie arrière en forme d'écrou vissée sur un filetage correspondant formé sur l'injecteur d'ergols, et une partie intermédiaire bombée vers l'extérieur, comme décrit dans la demande de brevet FR 88 16472.

Dans l'exemple illustré, la cartouche 12 et la surface interne de la paroi tubulaire 24 sont également en contact mutuel à leur extrémité aval, ce qui permet de parfaire leur centrage mutuel et d'accroître la rigidité de l'ensemble. Cet appui local est réalisé partiellement, comme le montre la figure 2, de manière à ménager des passages 28a entre les zones de contact de la cartouche 12 avec la paroi tubulaire 24. Les passages 28a mettent en communication l'espace 28 formé par le jeu entre la cartouche 12 et la paroi tubulaire 24, avec le divergent de tuyère 22.

Des gaz de fuite pénétrant dans l'espace 28 depuis le foyer 14 en raison d'une éventuelle perméabilité de la paroi de la cartouche 12 sont donc ainsi réinjectés dans le divergent 22, la pression dans l'espace 28 étant déterminée, lors du fonctionnement de la chambre de combustion, par la dimension des passages 28a.

Selon une variante de réalisation de la chambre de combustion décrite ci-avant, des moyens peuvent être prévus pour injecter dans l'espace 28 un fluide afin de former un film de refroidissement à la surface interne du divergent 22. Comme montré par la figure 3, ce fluide de refroidissement, par exemple l'ergol combustible, est injecté à travers des passages 36 formés à travers la paroi 34 et le joint d'étanchéité 46, et communiquant avec des passages 16c formés à travers le rebord 16 de la cartouche 12 et débouchant dans l'espace 28. Le rebord 16 et l'extrémité 26 de la partie tubulaire 24 sont dans ce cas en appui mutuel par des surfaces radiales plutôt que tronconiques.

En variante, le fluide injecté pourra être destiné non pas à refroidir la surface interne du divergent, mais à réchauffer celle-ci, de même que la paroi de la cartouche 12.

La cartouche 12 peut être réalisée en métal, par fluotournage, usinage ou tout autre moyen de formage de métal. La cartouche 12 peut également être réalisée en un matériau réfractaire non métallique, de préférence un matériau composite réfractaire. Il en est de même pour l'enveloppe 20.

La réalisation de la cartouche 12 ou de l'enveloppe 20 (ou des deux) en matériau composite réfractaire comprend les étapes de formation d'un renfort fibreux et de densification de celui-ci par une matrice.

Le renfort fibreux est en fibres réfractaires, notamment fibres de carbone ou fibres céramiques, par exemple des fibres de carbure de silicium.

De façon bien connue en soi, il est constitué par exemple par drapage ou enroulement de textures bidimensionnelles, telles que des strates de tissu, de ruban ou de feutre, ou par bobinage filamentaire.

Le renfort fibreux, le cas échéant maintenu en forme au moyen d'un outillage, est densifié par exemple par infiltration chimique en phase vapeur du matériau réfractaire constitutif de la matrice tel que, par exemple, du carbone ou une céramique (carbure de silicium).

Un procédé pour la réalisation d'un renfort fibreux ayant une forme de révolution non cylindrique est décrit dans le brevet FR-A-2 557 550. Des techniques de densification par infiltration en phase vapeur de carbone ou de matériaux réfractaires autres que le carbone sont décrites dans les brevets FR-A-2 189 207, FR-A-2 401 888 et FR-A-2 567 874.

## Revendications

1. Chambre de combustion de propulseur comportant une chambre avec un foyer (14) prolongé du côté aval par un col de tuyère (18) et un divergent de tuyère (22) raccordé au col, la chambre étant munie à son extrémité amont de moyens de raccordement à un injecteur d'ergols (30), ladite chambre étant caractérisée en ce qu'elle est constituée d'une première partie (12) comprenant le foyer (14) et le col de tuyère (18) et d'une deuxième partie (20) comprenant le divergent de tuyère (22) prolongé vers l'amont par une paroi (24) entourant la première partie, en ménageant un jeu (28) avec elle, la liaison entre les première et deuxième parties (12, 20) étant réalisée dans une zone située au niveau ou à proximité de l'extrémité amont de la chambre.

2. Chambre selon la revendication 1, caractérisée en ce que l'espace (28) situé entre la première partie (12) et la paroi (24) de la deuxième partie (20) qui l'entoure communique avec le divergent de tuyère (22).

3. Chambre selon l'une quelconque des revendications 1 et 2, caractérisée en ce qu'au moins un appui local est ménagé entre la première partie (12) et la paroi (24) de la deuxième partie (20) qui l'entoure.

4. Chambre selon l'une quelconque des revendications 1 à 3, caractérisée en ce que des moyens (36) sont prévus pour injecter un fluide dans l'espace (28) situé entre la première partie (12) et la paroi (24) de la deuxième partie (20) qui l'entoure.

5. Chambre selon l'une quelconque des revendications 1 à 4, caractérisée en ce que l'une au moins des première et deuxième parties (12, 20) est réalisée en matériau composite réfractaire.

## Patentansprüche

1. Raketenbrennkammer, bestehend aus einer Kammer mit einem Brennraum (14), der stromabwärtig durch einen Düsenhals (18) und eine an den Düsenhals angeschlossene Expansionsdüse (22) verlängert ist, wobei die Kammer an ihrem stromaufwärtigen Ende mit Einrichtungen zum Anschließen an eine Treibstoffdüse (30) versehen ist,
**dadurch gekennzeichnet, daß**
die Kammer aus einem ersten Abschnitt (12) besteht, der den Brennraum (14) und den Düsenhals (18) umfaßt, und einem zweiten Abschnitt (20), der die Expansionsdüse (22) aufweist, die stromaufwärts durch eine Wand (24) verlängert ist, die den ersten Teil unter Bildung eines Zwischenraums (28) mit diesem umgibt, wobei die Verbindung zwischen dem ersten und zweiten Teil (12, 20) in einer Zone erfolgt, die in der Höhe des oder nahe dem stromaufwärtigen Ende der Kammer liegt.

2. Raketenbrennkammer nach Anspruch 1,
**dadurch gekennzeichnet, daß**
der Zwischenraum (28), der zwischen dem ersten Abschnitt (12) und der Wand (24) des zweiten Abschnitts (20) liegt, die ihn umgibt, mit der Expansionsdüse (22) verbunden ist.

3. Raketenbrennkammer nach Anspruch 1 oder 2,
**dadurch gekennzeichnet, daß**
wenigstens eine örtliche Abstützung zwischen dem ersten Abschnitt (12) und der Wand (24) des zweiten Abschnitts (20), die ihn angibt, gebildet ist.

4. Raketenbrennkammer nach einem der Ansprüche 1 bis 3,
**dadurch gekennzeichnet, daß**
Einrichtungen (36) vorgesehen sind, um ein Strömungsmittel in den Zwischenraum (28) einzuspritzen, das zwischen dem ersten Abschnitt (12) und der Wand (24) des zweiten Abschnitts (20), die ihn umgibt, liegt.

5. Raketenbrennkammer nach einem der Ansprüche 1 bis 4,
**dadurch gekennzeichnet,** **daß**
wenigstens ein Abschnitt des ersten und zweiten Abschnitts (12, 20) aus einem hitzebeständigen Materialgemisch besteht.

## Claims

1. Thrust chamber for a propulsion unit comprising a combustion chamber (14) prolonged downstream by a nozzle throat (18), and a nozzle extension (22) the latter being joined to the throat, the thrust chamber being provided, at an upstream end thereof, with means for connection to a propellant injector (30), said chamber being characterized in that it is formed by a first part (12) comprising the combustion chamber (14) and the nozzle throat (18), and a second part (20) comprising the nozzle extension (22) the latter being prolonged upstream by an envelope (24) surrounding the first part, while maintaining a clearance (28) therebetween, the first and second parts (12, 20) being joined at a zone situated at the level of, or in proximity to, the upstream end of the thrust chamber.

2. Thrust chamber according to claim 1, characterized in that the clearance (28), located between the first part (12) and the envelope (24) of the second part (20) surrounding the first part, communicates with the nozzle extension (22).

3. Thrust chamber according to any one of claims 1 and 2, characterized in that at least one local contact surface is provided between the first part (12) and the envelope (24) of the second part (20) surrounding it.

4. Thrust chamber according to any one of claims 1 to 3, characterized in that means (36) are provided for injecting a fluid in the clearance (28) located between the first part (12) and the envelope (24) of the second part (20) surrounding it.

5. Thrust chamber according to any one of claims 1 to 4, characterized in that at least either the first or the second part (12, 20) is made of refractory composite material.
